# FASCICULE DE BREVET EUROPEEN

(11) **EP 4 222 021 B1**
(45) Date de publication et mention de la délivrance du brevet: **12.02.2025**
(21) Numéro de dépôt: 21789622.4
(22) Date de dépôt: 30.09.2021
(51) Int. Cl.: B60R 5/04, H01R 35/04, B60R 16/027

(54) **SYSTÈME DE MONTAGE EN ROTATION ET DE CONNEXION ÉLECTRIQUE D'UNE TABLETTE DE RECOUVREMENT D'UN COMPARTIMENT À BAGAGES DE VÉHICULE AUTOMOBILE**
SYSTEM ZUR DREHBAREN MONTAGE UND ELEKTRISCHEN VERBINDUNG EINER VERKLEIDUNGSPLATTE FÜR EINEN KRAFTFAHRZEUGKOFFERRAUM
SYSTEM FOR ROTATABLY MOUNTING AND ELECTRICALLY CONNECTING A COVERING PANEL FOR A MOTOR VEHICLE BOOT

(30) Priorité: 30.09.2020 FR 2009947
(43) Date de publication de la demande: 09.08.2023
(73) Titulaire: TREVES PRODUCTS, SERVICES & INNOVATION, 75008 Paris (FR)
(72) Inventeur: BRILLON, Eric, 75008 Paris (FR); GUENAMANT, Nicolas, 75008 Paris (FR)
(74) Mandataire: Sayettat, Julien Christian
(86) Numéro de dépôt international: PCT/EP2021/077033
(87) Numéro de publication internationale: WO 2022/069681

(56) Documents cités:
- EP-A1- 1 545 098
- WO-A1-2019/155091
- FR-A1- 2 706 015
- JP-A- S5 950 836
- JP-A- S58 224 831

## Description

L'invention concerne un système de montage en rotation et de connexion électrique d'une tablette de recouvrement d'un compartiment à bagages de véhicule automobile sur une ébénisterie de garnissage latéral dudit compartiment, et aussi une tablette et une ébénisterie pour un tel système.

Il est connu, notamment du document FR-2 706 015, de réaliser un système de montage en rotation d'une tablette de recouvrement d'un compartiment à bagages de véhicule automobile sur une ébénisterie de garnissage latéral dudit compartiment, ladite tablette étant actionnable entre une position horizontale de recouvrement et une position inclinée d'accès audit compartiment, ledit système comprenant :
- une zone avant de ladite ébénisterie formant zone de fixation, ladite zone étant pourvue d'un doigt saillant transversalement de ladite ébénisterie,
- un coin avant de ladite tablette pourvu d'un moyen de réception en emboitement dudit doigt, ledit moyen présentant une forme générale de C définissant un logement de section complémentaire à celle dudit doigt, l'ouverture du C présentant une taille moindre que la section dudit doigt de manière à permettre une insertion en force dudit doigt dans ledit logement avec écartement élastique temporaire des branches du C puis le maintien dudit doigt dans ledit logement.

Il est également connu de pourvoir la tablette d'un dispositif électrique, tel qu'un ou plusieurs haut-parleurs ou transducteurs électrodynamiques ou magnétostrictifs, ou encore un éclairage.

Il est alors nécessaire d'établir une connexion électrique entre la tablette et au moins une ébénisterie, afin de pouvoir connecter le dispositif électrique par exemple à un amplificateur ou encore sur la batterie du véhicule.

On note ici que le terme « tablette » désigne notamment une tablette montée en haut du compartiment à bagages, de manière à occulter ledit compartiment, mais peut également désigner un panneau monté en bas dudit compartiment pour former un « faux-plancher » permettant notamment d'occulter une roue de secours.

Il est alors nécessaire de satisfaire à plusieurs exigences :
- robustesse du système de montage et de connexion,
- fiabilité de la connexion au fil du temps,
- connexion opérationnelle dans toutes les positions que peut adopter la tablette - dont la rotation entre les positions de recouvrement et d'accès se fait usuellement sur une plage angulaire très inférieure à 90°, étant par exemple de l'ordre de 45° - et ceci malgré les dispersions dimensionnelles transversales qui peuvent être observées pour le compartiment à bagages d'un véhicule à l'autre.

L'invention a pour but de proposer un système permettant de répondre à ces différentes exigences.

A cet effet, et selon un premier aspect, l'invention propose une tablette de recouvrement d'un compartiment à bagages de véhicule automobile, avec les caractéristiques de la revendication 1.

Selon un second aspect, l'invention propose un système de montage en rotation et de connexion électrique d'une telle tablette sur une ébénisterie de garnissage latéral dudit compartiment, ledit système comprenant les caractéristiques de la revendication 2.

Dans cette description, les termes de positionnement dans l'espace (longitudinal, transversal, latéral, avant, horizontal, vertical, ...) sont pris en référence au système en place dans le véhicule.

Par ailleurs, les termes faisant référence à un axe (diamétralement, axialement, ...) sont pris en référence à l'axe de rotation de la tablette.

Avec l'agencement proposé, on dispose d'un système assurant :
- une robustesse des éléments permettant le montage et la connexion, en particulier du fait que les connecteurs sont protégés des chocs quand la tablette est démontée, ceci de par leur localisation à l'intérieur du logement,
- une fiabilité de la connexion au fil du temps, en particulier du fait que les connecteurs sont en appui élastique sur les connecteurs réciproques
- une connexion opérationnelle dans toutes les positions que peut adopter la tablette, et ceci malgré les dispersions dimensionnelles transversales qui peuvent être observées pour le compartiment à bagages d'un véhicule à l'autre, une telle opérationnalité étant assurée à la fois par la forme des bandes de contact définies par les connecteurs réciproques (en secteurs angulaires opposés permettant un contact électrique dans toutes les positions de la tablette), et aussi par leur largeur définie pour pallier lesdites dispersions.

D'autres particularités et avantages de l'invention apparaîtront dans la description qui suit, faite en référence aux figures jointes, dans lesquelles :

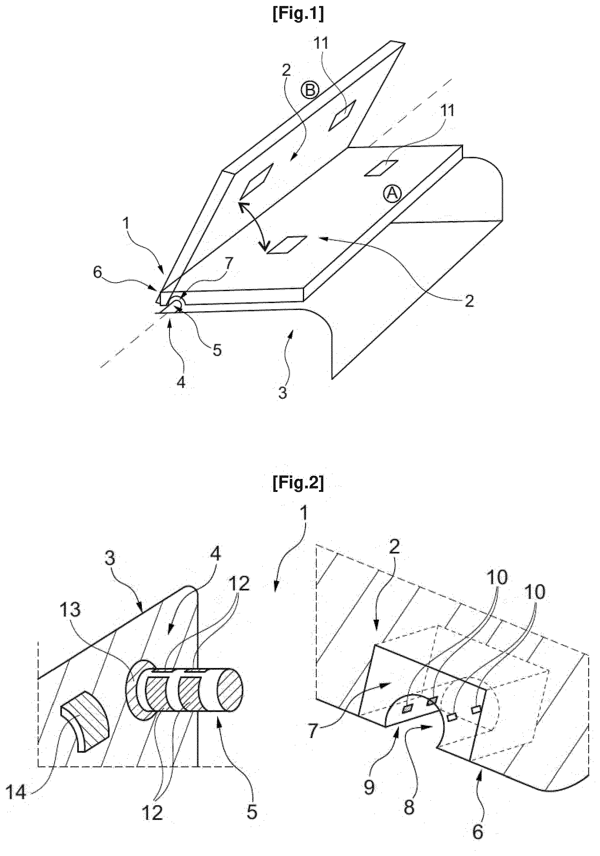

[Fig.1] est une vue schématique en perspective d'une tablette montée dans un véhicule, ladite tablette étant représentée en position de recouvrement (A) et d'accès (B),
[Fig.2] est une vue schématique en perspective et en semi transparence d'un système de montage et de connexion d'une tablette selon une réalisation, la tablette étant démontée de l'ébénisterie,

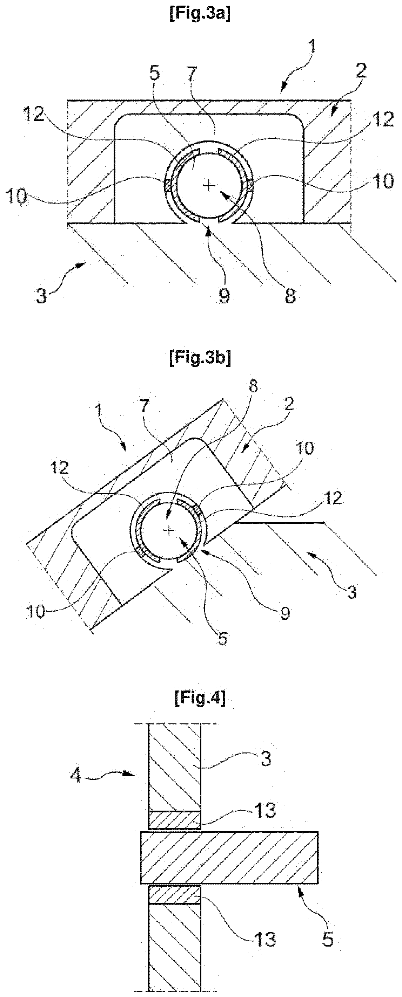

[Fig.3a] et
[Fig.3b] sont des vues schématiques en coupe verticale longitudinale du système de la figure 2 une fois la tablette montée sur l'ébénisterie, ladite tablette étant en position de recouvrement (figure 3a) et en position d'accès (figure 3b),
[Fig. 4] est une vue schématique en coupe verticale transversale partielle du système de la figure 2.

En référence aux figures, on décrit un système 1 de montage en rotation et de connexion électrique d'une tablette 2 de recouvrement d'un compartiment à bagages de véhicule automobile sur une ébénisterie 3 de garnissage latéral dudit compartiment, ladite tablette étant actionnable entre une position horizontale de recouvrement et une position inclinée d'accès audit compartiment, ledit système comprenant :
- une zone avant 4 de ladite ébénisterie formant zone de fixation, ladite zone étant pourvue d'un doigt 5 - notamment en matériau plastique moulé - saillant transversalement de ladite ébénisterie,
- un coin avant 6 de ladite tablette pourvu d'un moyen de réception 7 en emboitement dudit doigt, ledit moyen - notamment en matériau plastique moulé - présentant une forme générale de C définissant un logement 8 de section complémentaire à celle dudit doigt - le C étant ici tourné d'un quart de tour pour présenter son ouverture 9 vers le bas -, l'ouverture 9 du C présentant une taille moindre que la section dudit doigt de manière à permettre une insertion en force dudit doigt dans ledit logement avec écartement élastique temporaire des branches du C puis le maintien dudit doigt dans ledit logement,
ledit système présentant en outre les caractéristiques suivantes :
- ledit moyen est pourvu, sur la paroi dudit logement, d'au moins une paire de connecteurs 10 électriques destinés à être reliés à un dispositif électrique 11 - par exemple un haut-parleur, un transducteur ou un éclairage - monté sur ladite tablette, lesdits connecteurs étant élastiquement rétractables et saillant vers l'intérieur du C, lesdits connecteurs se faisant sensiblement face diamétralement,
- ledit doigt est pourvu d'au moins une paire de connecteurs réciproques 12 sur lesquels prennent respectivement appui chacun desdits connecteurs, lesdits connecteurs réciproques définissant deux bandes disjointes de contact disposées selon un même positionnement axial, lesdites bandes étant dans le prolongement l'une de l'autre et s'inscrivant en vue en coupe verticale longitudinale dans deux secteurs angulaires opposés d'un même cercle, de manière à assurer une connexion entre lesdits connecteurs et connecteurs réciproques dans toutes les positions occupées par ladite tablette entre lesdites positions de recouvrement et d'accès.

Selon la réalisation représentée, le système 1 comprend deux paires de connecteurs 10 coopérant avec deux paires respectives de connecteurs réciproques 12, lesdites paires de connecteurs et de connecteurs réciproques s'étageant axialement l'une après l'autre.

Avec un tel agencement, on peut prévoir de pourvoir la tablette 2 de deux dispositifs électriques 11 alimentés indépendamment l'un de l'autre.

Dans le cas de dispositifs 11 comme des haut-parleurs ou des transducteurs, on peut réaliser ainsi un effet stéréophonique.

En variante non représentée, on pourrait prévoir de disposer une paire de connecteurs 10 dans chaque coin avant 6 de la tablette 2, lesdits connecteurs coopérant avec des connecteurs réciproques 12 localisés sur deux ébénisteries latérales 3.

Selon la réalisation représentée, les connecteurs 10 sont sous forme de lames en métal à ressort.

Selon la réalisation représentée, le système 1 comprend en outre un moyen de découplage 13 élastique - ici sous la forme d'un manchon en caoutchouc - s'interposant entre le doigt 5 et la zone de fixation 4, un tel agencement s'avérant particulièrement adapté dans le cas d'un dispositif électrique 11 de type transducteur.

Selon la réalisation représentée, le système 1 comprend en outre un moyen de centrage 14 transversal - sous la forme d'une lame en métal à ressort selon la réalisation représentée, ou d'un plot monté sur ressort en variante non représentée, ou encore d'un plot élastiquement compressible en autre variante non représentée - de la tablette 2, ledit moyen étant situé soit dans la zone de fixation 4 de l'ébénisterie, selon la réalisation représentée, soit dans le coin avant 6 de ladite tablette, selon une réalisation non représentée, ledit moyen étant destiné à coopérer avec un moyen analogue prévu respectivement soit sur une autre ébénisterie prévue de l'autre côté du compartiment à bagages soit sur l'autre coin avant de ladite tablette.

La mise en œuvre d'un tel moyen de centrage 14 contribue à pallier les dispersions dimensionnelles transversales observées sur les compartiments à bagages d'un véhicule à l'autre.

Selon une réalisation, une bande définie par un connecteur réciproque 12 présente une largeur (correspondant à sa dimension axiale) minimale de 7 mm, une telle largeur permettant d'absorber les dispersions usuellement observées.

On décrit à présent une tablette 2 pour un tel système 1, un coin avant 6 de ladite tablette étant pourvu d'un moyen de réception 7 destiné à recevoir en emboitement un doigt 5 issu d'une ébénisterie latérale 3, ledit moyen présentant une forme générale de C définissant un logement 8, ledit moyen étant pourvu, sur la paroi dudit logement, d'au moins une paire de connecteurs électriques 10, lesdits connecteurs étant élastiquement rétractables et saillant vers l'intérieur du C, lesdits connecteurs se faisant sensiblement face diamétralement, ladite tablette étant en outre pourvue d'un dispositif électrique 11 (haut-parleur, transducteur, éclairage,...) relié auxdits connecteurs.

On décrit enfin une ébénisterie de garnissage latéral 3 de compartiment à bagages de véhicule automobile pour un tel système 1, une zone avant 4 de ladite ébénisterie formant zone de fixation, ladite zone étant pourvue d'un doigt 5 saillant transversalement de ladite ébénisterie, ledit doigt étant pourvu d'au moins une paire de connecteurs réciproques 12 - destinés par exemple à être reliés à un amplificateur ou à une batterie - sur lesquels sont destinés à prendre contact une paire de connecteurs 10 issus d'une tablette 2, lesdits connecteurs réciproques définissant deux bandes disjointes de contact disposées selon un même positionnement axial, lesdites bandes étant dans le prolongement l'une de l'autre et s'inscrivant en vue en coupe verticale longitudinale dans deux secteurs angulaires opposés d'un même cercle.

## Revendications

1. Tablette (2) de recouvrement d'un compartiment à bagages de véhicule automobile, un coin avant (6) de ladite tablette étant pourvu d'un moyen de réception (7) destiné à recevoir en emboitement un doigt (5) issu d'une ébénisterie latérale (3), ledit moyen présentant une forme générale de C définissant un logement (8), ladite tablette étant **caractérisée en ce que** ledit moyen est pourvu, sur la paroi dudit logement, d'au moins une paire de connecteurs électriques (10), lesdits connecteurs étant élastiquement rétractables et saillant vers l'intérieur du C, lesdits connecteurs se faisant sensiblement face diamétralement, ladite tablette étant en outre pourvue d'un dispositif électrique (11) relié auxdits connecteurs.

2. Système (1) de montage en rotation et de connexion électrique d'une tablette (2) selon la revendication 1 sur une ébénisterie (3) de garnissage latéral d'un compartiment à bagages de véhicule automobile, ladite tablette étant actionnable entre une position horizontale de recouvrement et une position inclinée d'accès audit compartiment, ledit système comprenant
une zone avant (4) de ladite ébénisterie formant zone de fixation, ladite zone étant pourvue d'un doigt (5) saillant transversalement de ladite ébénisterie,
la forme générale de C définissant le logement (8) étant de section complémentaire à celle dudit doigt,
l'ouverture (9) du C présentant une taille moindre que la section dudit doigt de manière à permettre une insertion en force dudit doigt dans ledit logement avec écartement élastique temporaire des branches du C puis le maintien dudit doigt dans ledit logement,
ledit système étant **caractérisé en ce que** :
ledit doigt est pourvu d'au moins une paire de connecteurs réciproques (12) sur lesquels prennent respectivement appui chacun desdits connecteurs, lesdits connecteurs réciproques définissant deux bandes disjointes de contact disposées selon un même positionnement axial, lesdites bandes étant dans le prolongement l'une de l'autre et s'inscrivant en vue en coupe verticale longitudinale dans deux secteurs angulaires opposés d'un même cercle, de manière à assurer une connexion entre lesdits connecteurs et connecteurs réciproques dans toutes les positions occupées par ladite tablette entre lesdites positions de recouvrement et d'accès.

3. Système selon la revendication 2, **caractérisé en ce qu'**il comprend deux paires de connecteurs (10) coopérant avec deux paires respectives de connecteurs réciproques (12), lesdites paires de connecteurs et de connecteurs réciproques s'étageant axialement l'une après l'autre.

4. Système selon l'une des revendications 2 ou 3, **caractérisé en ce que** les connecteurs (10) sont sous forme de lames en métal à ressort.

5. Système selon l'une quelconque des revendications 2 à 4, **caractérisé en ce qu'**il comprend en outre un moyen de découplage élastique (13) s'interposant entre le doigt (5) et la zone de fixation (4).

6. Système selon l'une quelconque des revendications précédentes, **caractérisé en ce qu'**il comprend en outre un moyen de centrage (14) transversal de la tablette (2), ledit moyen étant situé soit dans la zone de fixation (4) de l'ébénisterie (3) soit dans le coin avant (6) de ladite tablette, ledit moyen étant destiné à coopérer avec un moyen analogue prévu respectivement soit sur une autre ébénisterie prévue de l'autre côté du compartiment à bagages soit sur l'autre coin avant de ladite tablette.

7. Système selon l'une quelconque des revendications 2 à 6, **caractérisé en ce qu'**une bande définie par un connecteur réciproque (12) présente une largeur minimale de 7 mm.

## Patentansprüche

1. Hutablage (2) für einen Gepäckraum eines Kraftfahrzeugs, wobei eine vordere Ecke (6) der Ablage mit einem Aufnahmemittel (7) versehen ist, das dazu bestimmt ist, einen von einer seitlichen Platte (3) vorstehenden Zapfen (5) durch Verriegeln aufzunehmen, wobei das Mittel eine allgemeine C-Form aufweist, die eine Aufnahme (8) definiert, wobei die Ablage **dadurch gekennzeichnet ist, dass** das Mittel an der Wand der Aufnahme mit mindestens einem Paar elektrischer Verbinder (10) versehen ist, wobei die Verbinder elastisch zurückziehbar sind und in Richtung der Innenseite des C vorstehen, wobei die Verbinder im Wesentlichen diametral einander zugewandt sind, wobei die Ablage ferner mit einer elektrischen Vorrichtung (11) versehen ist, die mit den Verbindern verbunden ist.

2. System (1) zur drehbaren Montage und elektrischen Verbindung einer Hutablage (2) nach Anspruch 1 an einer seitlichen Verkleidungsplatte (3) eines Kofferraums eines Kraftfahrzeugs, wobei die Ablage zwischen einer horizontalen Abdeckposition und einer geneigten Position für den Zugang zum Kofferraum betätigbar ist, wobei das System Folgendes umfasst:
einen vorderen Bereich (4) der Platte, der einen Befestigungsbereich bildet, wobei der Bereich mit einem Zapfen (5) versehen ist, der quer von der Platte hervorsteht, wobei die allgemeine C-Form, die die Aufnahme (8) definiert, komplementär zu der des Zapfens ist,
wobei die Öffnung (9) des C eine kleinere Größe als der Querschnitt des Zapfens aufweist, um ein erzwungenes Einführen des Zapfens in die Aufnahme mit einem vorübergehenden elastischen Abstand der Arme des C und ein anschließendes Halten des Zapfens in der Aufnahme zu ermöglichen,
wobei das System **dadurch gekennzeichnet ist, dass**:
der Zapfen mit mindestens einem Paar von Gegenverbindern (12) versehen ist, auf denen jeder der Verbinder jeweils aufliegt, wobei die Gegenverbinder zwei getrennte Kontaktstreifen definieren, die in derselben axialen Positionierung angeordnet sind, wobei die Streifen in der Verlängerung voneinander sind und im vertikalen Längsschnitt betrachtet in zwei gegenüberliegenden Winkelsektoren desselben Kreises liegen, um eine Verbindung zwischen den Verbindern und den Gegenverbindern in allen Positionen, die die Ablage zwischen der Abdeck- und der Zugangsposition einnimmt, sicherzustellen.

3. System nach Anspruch 2, **dadurch gekennzeichnet, dass** es ferner zwei Paare von Verbindern (10) umfasst, die mit zwei jeweiligen Paaren von Gegenverbindern (12) zusammenwirken, wobei die Paare von Verbindern und Gegenverbindern axial nacheinander abgestuft sind.

4. System nach einem der Ansprüche 2 oder 3, **dadurch gekennzeichnet, dass** die Verbinder (10) in Form von Metallklingen mit Feder vorliegen.

5. System nach einem der Ansprüche 2 bis 4, **dadurch gekennzeichnet, dass** es ferner ein elastisches Entkopplungsmittel (13) umfasst, das zwischen dem Zapfen (5) und dem Befestigungsbereich (4) eingefügt ist.

6. System nach einem der vorhergehenden Ansprüche, **dadurch gekennzeichnet, dass** es ferner ein Querzentrierungsmittel (14) für die Ablage (2) umfasst, wobei sich das Mittel entweder im Befestigungsbereich (4) der Platte (3) oder in der vorderen Ecke (6) der Ablage befindet, wobei das Mittel dazu bestimmt ist, mit einem ähnlichen Mittel zusammenzuwirken, das jeweils entweder an einer anderen Platte, die auf der anderen Seite des Kofferraums vorgesehen ist, oder an der anderen vorderen Ecke der Ablage bereitgestellt ist.

7. System nach einem der Ansprüche 2 bis 6, **dadurch gekennzeichnet, dass** ein Streifen, der durch einen Gegenverbinder (12) definiert ist, eine Mindestbreite von 7 mm aufweist.

## Claims

1. A covering panel (2) of a motor vehicle boot, a front corner (6) of said panel being provided with a receiving means (7) intended to receive a pin (5) projecting from a side interior trim (3) by interlocking, said means having a C-like general shape defining a housing (8), said panel being **characterised in that** said means is provided, on the wall of said housing, with at least one pair of electrical connectors (10), said connectors being elastically retractable and projecting towards the inside of the C, said connectors substantially facing one another diametrically, said panel being further provided with an electrical device (11) connected to said connectors.

2. A system (1) for rotatably mounting and electrically connecting a panel (2) according to claim 1 on a side interior trim (3) of a motor vehicle boot, said panel being operable between a horizontal covering position and an inclined position for accessing said boot, said system comprising:
• a front zone (4) of said interior trim forming a fastening zone, said zone being provided with a pin (5) projecting transversely from said interior trim, the C-like general shape defining the housing (8) being of section complementary to that of said pin, the opening (9) of the C having a smaller size than the section of said pin so as to enable forced insertion of said pin into said housing with temporary elastic separation of the branches of the C then holding of said pin in said housing,
said system being **characterised in that**:
said pin is provided with at least one pair of reciprocal connectors (12) on which each of said connectors bears respectively, said reciprocal connectors defining two separate contact strips disposed according to the same axial positioning, said strips being in line with one another and falling within two opposite angular sectors of the same circle when viewed in longitudinal vertical cross-section, so as to ensure connection between said connectors and reciprocal connectors in all of the positions occupied by said panel between said covering and access positions.

3. The system according to claim 2, **characterised in that** it comprises two pairs of connectors (10) cooperating with two respective pairs of reciprocal connectors (12), said pairs of connectors and reciprocal connectors being staged axially one after another.

4. The system according to claim 2 or 3, **characterised in that** the connectors (10) are in the form of blades made of spring metal.

5. The system according to any one of the claims 2 to 4, **characterised in that** it further comprises an elastic decoupling means (13) interposed between the pin (5) and the fastening zone (4).

6. The system according to any one of the preceding claims, **characterised in that** it further comprises a means (14) for transversely centring the panel (2), said means being located either in the fastening zone (4) of the interior trim (3) or in the front corner (6) of said panel, said means being intended to cooperate with a similar means provided respectively either on another interior trim provided on the other side of the boot or on the other front corner of said panel.

7. The system according to any one of the claims 2 to 6, **characterised in that** a strip defined by a reciprocal connector (12) has a minimum width of 7 mm.
